# EUROPEAN PATENT APPLICATION

(11) **EP 3 258 107 A1**
(43) Date of publication of application: **20.12.2017**
(21) Application number: 16748940.0
(22) Date of filing: 05.01.2016
(51) Int. Cl.: F04B 39/06, F04C 29/04

(54) **ELECTRIC COMPRESSOR**

(30) Priority: 12.02.2015 JP 2015025291
(71) Applicant: Calsonic Kansei Corporation, Saitama-shi, Saitama 331-8501 (JP)
(72) Inventor: TERAZAWA, Junichirou, Saitama-shi Saitama 331-8501 (JP)
(74) Representative: Grünecker Patent- und Rechtsanwälte PartG mbB
(86) International application number: PCT/JP2016/050081
(87) International publication number: WO 2016/129295

(57) **Abstract**

When a power switching element (9b) brought into contact with a contact part (11i) formed at a back side of a suction refrigerant passage (13) is cooled by refrigerant that has been sucked in through a suction port (11c) and that is passing through the suction refrigerant passage (13), high-temperature, high-pressure refrigerant flowing in from a compression chamber (7a) to a suction chamber (7b) is prevented from flowing back by a check valve (15). Therefore, there is always low-temperature, low-pressure refrigerant in the suction refrigerant passage (13), and the power switching element (9b) can be efficiently cooled by the refrigerant in the suction refrigerant passage (13).

## Description

### Technical Field

The present invention relates to a compressor for a refrigerating cycle which compresses a refrigerant, in particular to an electric compressor provided with an electric motor as a driving source.

### Background Art

A compressor used for a refrigerating cycle which sucks a low temperature and low pressure refrigerant and discharges a high temperature and high pressure refrigerant due to compression. Among compressors, there is an electric compressor provided with an electric motor as a driving source of a compression mechanism for the refrigerant. In the electric compressor, a driving circuit which converts direct current provided from a power source into alternating current by an inverter and supplies the alternating current to the electric motor is arranged.

The inverter is provided with a power switching element such as an IGBT (Insulated Gate Bipolar Transistor) and a MOSFET (Metal Oxide Semiconductor Field Effect Transistor).

The power switching element generates heat by loss in switching (switching loss). When a temperature of the power switching element exceeds a heat resistance temperature by the heat, the power switching element is damaged. Thus, a configuration in which a passage for a low temperature and low pressure suction refrigerant and the power switching element are arranged along respective surfaces of partition walls which define respective housing spaces of the driving circuit and the compression mechanism and the power switching element is cooled by the suction refrigerant through the partition wall is conventionally proposed (see Patent Literature 1).

### Citation List

### Patent Literature

Patent Literature 1: JP 2007-224809 A

### Summary of Invention

### Technical Problem

In the conventional technique, during a period in which the electric compressor is stopped, the high pressure refrigerant located at a part of a discharge side flows into a part of a suction side, and thereby when the electric compressor is activated in which heat generation of the power switching element becomes maximum, the high temperature and high pressure refrigerant flowing into the part of the suction side from the part of the discharge side reaches a passage of the suction refrigerant, and therefore the power switching element might not be cooled sufficiently.

An object of the present invention is, in consideration of the problem described above, to provide an electric compressor capable of cooling a power switching element sufficiently by a refrigerant in a passage for a suction refrigerant.

### Solution to Problem

In order to achieve the above object, an electric compressor according to an aspect of the present invention is an electric compressor which drives a compression mechanism for a refrigerant driven by the electric motor. The electric compressor includes a main housing housing the compression mechanism and the electric motor, a circuit housing housing a driving circuit of the electric motor, and is partitioned from the main housing by a partition wall, a suction refrigerant passage arranged on one surface of the partition wall exposed to the main housing and formed such that the refrigerant flowing into the suction refrigerant passage from an outside of the main housing through a suction port is sucked to an inside of the main housing through a refrigerant outlet, a check valve arranged in the suction refrigerant passage and configured to prevent the refrigerant from flowing backward from the refrigerant outlet toward the suction port in the suction refrigerant passage, and a power switching element contacted with a contact part in the other surface of the partition wall exposed to the circuit housing, the contact part opposed to a part of the suction refrigerant passage at a side of the suction port with respect to the check valve.

The check valve of the electric compressor according to the aspect of the present invention may include a valve body movable along a passing direction of the refrigerant in the suction refrigerant passage, a valve seat member having a valve seat part with which the valve body comes into contact with and separate from the refrigerant outlet side and is fixed to an inner surface of the suction refrigerant passage, and a spring biasing the valve body in a valve closing direction in contact with the valve seat part. The valve seat member may be formed to have a length in the passing direction of the refrigerant such that a part of the inner surface at a side of the suction port with respect to the valve seat member is exposed.

The check valve of the electric compressor according to the aspect of the present invention may include a valve body movable along a passing direction of the refrigerant in the suction refrigerant passage, a valve seat member having a valve seat part with which the valve body comes into contact with and separate from the refrigerant outlet side and is fixed to an inner surface of the suction refrigerant passage, and a spring biasing the valve body in a valve closing direction in contact with the valve seat part. The valve seat member may include an opening part which exposes a part of the inner surface at a side of the suction port with respect to the valve seat part.

A wall thickness of a part of the partition wall according to the aspect of the present invention where the suction refrigerant passage is arranged may be smaller than a wall thickness of the partition wall at a peripheral part of the suction refrigerant passage.

### Advantageous Effects of Invention

According to the electric compressor according to one aspect of the present invention, the suction refrigerant passage is arranged at the part of the one surface of the partition wall facing the contact part to be contacted with the power switching element on the other surface of the partition wall. At this time, the power switching element contacted with the contact part is cooled via the partition wall by the low temperature and low pressure refrigerant flowing from the suction port and passing in the suction refrigerant passage toward the refrigerant outlet.

Here, when the electric compressor is stopped, the high temperature and high pressure refrigerant in the main housing, which tries to flow into the suction refrigerant passage from the refrigerant outlet, is prevented from flowing into the suction refrigerant passage by the check valve. Thus, a low temperature and low pressure refrigerant flowing from the suction port always exists at a part facing the contact part of the suction refrigerant passage to be contacted with the power switching element.

Accordingly, during a period in which the electric compressor is stopped, the power switching element, which is contacted with the contact part facing the suction refrigerant passage via the partition wall, is cooled by the low temperature and low pressure refrigerant in the suction refrigerant passage. In this way, the power switching element can be cooled sufficiently by the refrigerant in the suction refrigerant passage.

### Brief Description of Drawings

Fig. 1 illustrates a front view with a partial cross-section of an electric compressor according to one embodiment of the present invention.
Fig. 2 illustrates a side view seen from a side of a lid part of an inverter case shown in Fig. 1.
Fig. 3 illustrates a side view seen from a side of a circuit housing part of the inverter case shown in Fig. 1.
Fig. 4 illustrates a schematic view of a configuration of a check valve arranged in a suction refrigerant passage shown in Fig. 2.
Fig. 5 illustrates a side view seen from the side of the lid part of the inverter case shown in Fig. 1.
Figs. 6(a) to 6(c) illustrate views of the specific configurations of the check valve shown in Fig. 4.
Fig. 7 illustrates an enlarged cross-sectional view of a main part showing a wall thickness of a partition wall near a suction refrigerant passage shown in Fig. 2.

### Description of Embodiment

Hereinafter, an embodiment of the present invention is described with reference to drawings.

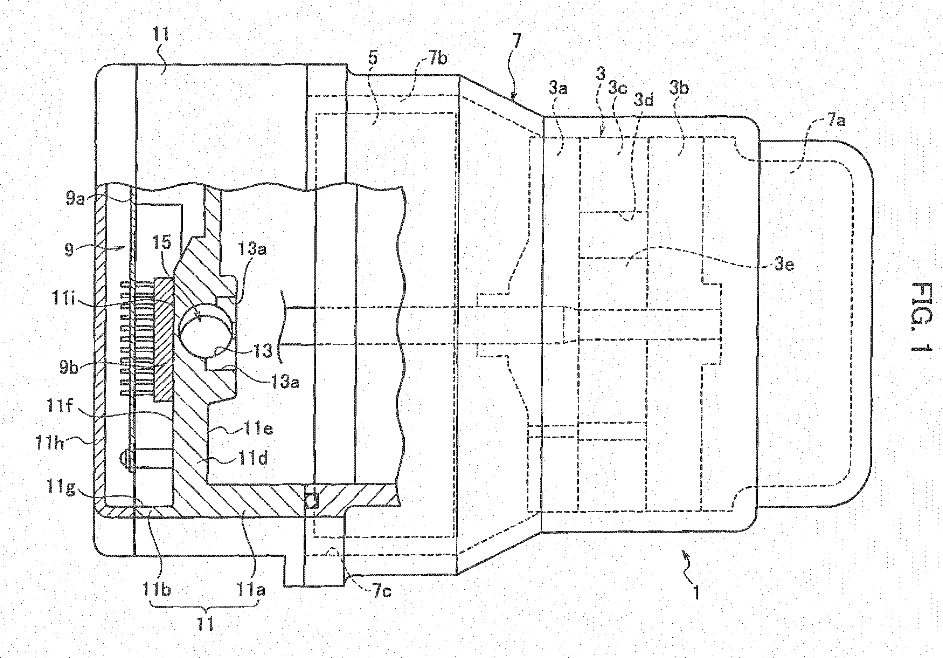

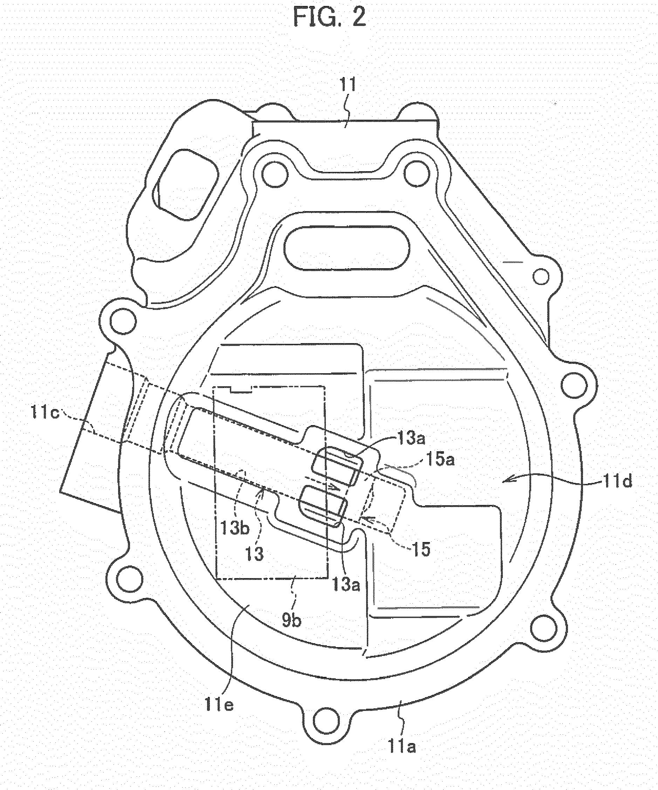

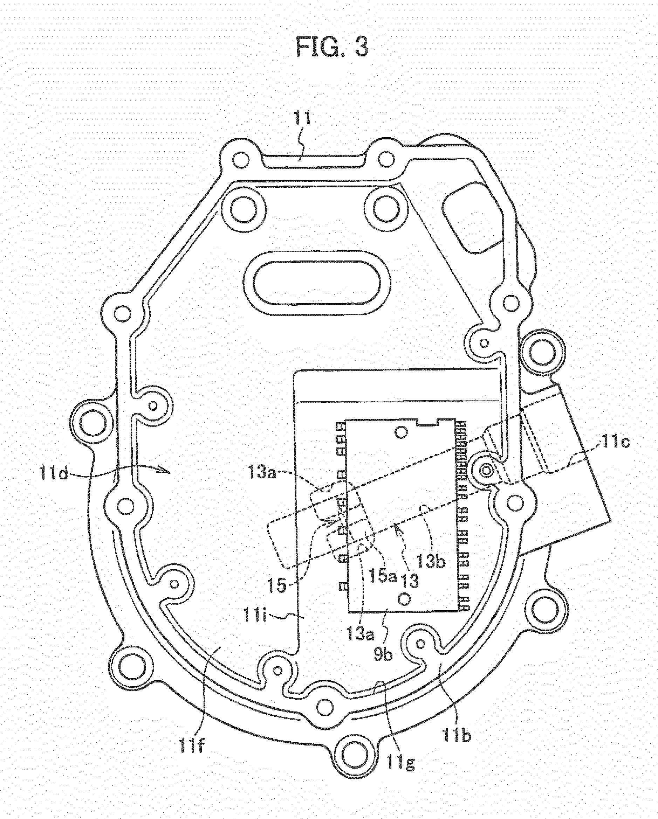

Fig. 1 illustrates a front view with a partial cross-section of an electric compressor according to one embodiment of the present invention, and Fig. 2 and Fig. 3 illustrate side views of an inverter case shown in Fig. 1. An electric compressor 1 of the present embodiment shown in Fig. 1 is formed to drive a compression mechanism 3 by using an electric motor 5 so as to compress a refrigerant.

Further, as shown in Fig. 1, the electric compressor 1 of the present embodiment is provided with, in addition to the compression mechanism 3 and the electric motor 5, a housing 7 (corresponding to a main housing in Claims) in which the compression mechanism 3 and the electric motor 5 are housed, and an inverter case 11 in which an inverter circuit 9 (corresponding to a driving circuit in Claims) formed as a driving circuit of the electric motor 5 is housed.

The compression mechanism 3 is provided with a pair of side blocks 3a, 3b, a cylinder block 3c intervened by the side blocks 3a, 3b, and a rotor 3e having a cylindrical shape housed in a cylinder chamber 3d having an oval shape formed in the cylinder block 3c. A plurality of vanes (not shown) is supported on a peripheral surface of the rotor 3e so as to appear and disappear from the peripheral surface.

When the rotor 3e is rotated in the cylinder chamber 3d by the electric motor 5, each vane of the rotor 3e appears and disappears in accordance with an inner surface of the cylinder chamber 3d. With this, volume of a space formed by the rotor 3e, two vanes adjacent to each other and the cylinder chamber 3d is changed. Further, a lower pressure refrigerant is sucked through a suction port (not shown) formed on the side block 3a during a period in which the volume of the space is increased. The suction refrigerant is compressed in accordance with decrease of the volume of the space. The compressed high pressure refrigerant is discharged from a discharge port (not shown) formed on the side block 3b.

The housing 7 is formed in a cylindrical shape with one end being sealed. The compression mechanism 3 is housed in the housing 7. Further, an inside of the housing 7 is partitioned by the housed compression mechanism 3 into a compression chamber 7a sealed and arranged at a sealed side, and a suction chamber 7b arranged at an opening side. The side block 3b is exposed to the compression chamber 7a. The side block 3a is exposed to the suction chamber 7b. The electric motor 5 is housed in the suction chamber 7b. The suction chamber 7b is sealed by the inverter case 11 mounted to an opening 7c of the housing 7.

The inverter case 11 is provided with a lid part 11a which seals the suction chamber 7b by covering the opening 7c of the housing 7, and a circuit housing part 11b (corresponding to a circuit housing in Claims) arranged at an outside of the suction chamber 7b (housing 7) sealed by the lid part 11a. The inverter circuit 9 is housed in the circuit housing part 11b.

As shown in Fig. 2, the lid part 11a is provided with a suction port 11c which communicates the outside of the housing 7 with the suction chamber 7b in a state in which the opening 7c of the housing 7 is covered, and a partition wall 11d which partitions the suction chamber 7b and the circuit housing part 11b. The suction port 11c is formed to suck a low temperature and low pressure refrigerant to be compressed by the compression mechanism 3 into the suction chamber 7b from an outside of the electric compressor 1 (for example, an evaporator of the refrigerating cycle). The suction port 11c is formed integrally with one surface 11e (corresponding to one surface in Claims) exposed to the suction chamber 7b of the partition wall 11d.

As shown in Fig. 3, the circuit housing part 11b is formed in a cylindrical shape having a bottom provided by the partition wall 11d. As shown in Fig. 1, a circuit substrate 9a of the inverter circuit 9 is fixed to other surface 11f (corresponding to other surface in Claims) of the partition wall 11d exposed to the circuit housing part 11b. The circuit housing part 11b is sealed by a cap 11h mounted to an opening 11 g of the circuit housing part 11b.

A power switching element 9b such as an IGBT and a MOSFET, which form the inverter circuit 9, is installed on the circuit substrate 9a. A casing of the power switching element 9b is contacted with a contact portion 11i (corresponding to a contact part in Claims) having a thick wall formed in the other surface 11f of the partition wall 11 d in a surface contact manner.

Further, in the present embodiment, a large gap is provided between the other surface 11f of the partition wall 11d and the circuit substrate 9a so that heat dissipation performance of the circuit substrate 9a is improved, and in order to allow the power switching element 9b to contact the other surface 11f of the partition wall 11d, the contact portion 11i is made to be thicker than other part of the partition wall 11d. However, the contact portion 11 i may be made to have the same thickness as other part of the partition wall 11d so that the power switching element 9b is contacted with the other surface 11f.

A suction refrigerant passage 13 is formed in the one surface 11e opposite to the other surface 11f on which the contact portion 11i of the partition wall 11d is formed. The suction refrigerant passage 13 is formed to introduce the refrigerant, which is passed through the suction port 11c from the outside of the electric compressor 1 (for example, an evaporator of the refrigerating cycle), into the suction chamber 7b sealed by the lid part 11 a.

As shown in Fig. 2, the suction refrigerant passage 13 is formed such that the refrigerant passed through the suction port 11c flows toward an outlet port 13a (corresponding to a refrigerant outlet in Claims) opened to the one surface 11e of the partition wall 11d exposed to the suction chamber 7b. A check valve 15 is arranged in the suction refrigerant passage 13.

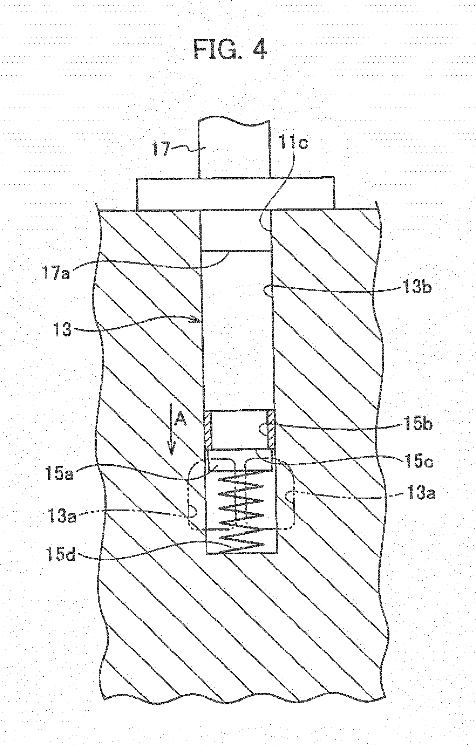

The check valve 15 is formed to prevent the refrigerant from flowing backward in the suction refrigerant passage 13 from the outlet port 13a toward the suction port 11c. As shown by the view in Fig. 4 schematically, the check valve 15 is provided with a valve body 15a, a valve seat member 15b and a spring 15d.

The valve body 15a is formed in a cylindrical shape having an outer diameter smaller than an inner diameter of the suction refrigerant passage 13 and formed in a movable manner along a passing direction A of the refrigerant in the suction refrigerant passage 13 from the suction port 11c toward the outlet port 13a.

The valve seat member 15b is formed in a cylindrical shape having an inner diameter smaller than the outer diameter of the valve body 15a. The valve seat member 15b is press-fitted into the suction refrigerant passage 13 from a side closer to the suction port 11c than the valve body 15a such that a center axial direction of the valve seat member 15b is matched with the passing direction A of the refrigerant, and the valve seat member 15b is fixed to an inner surface 13b of the suction refrigerant passage 13 at a position near the outlet port 13a at a side of the suction port 11c. The refrigerant flowing into the suction refrigerant passage 13 from the suction port 11c toward the outlet port 13a is passed through an inside of the valve seat member 15b.

The spring 15d is arranged opposite to the valve seat member 15b with respect to the valve body 15a. The spring 15d is formed to bias the valve body 15a in a valve closing direction such that the valve body 15a is contacted with a valve seat part 15c formed by an end surface of the valve seat member 15b arranged at a side of the outlet port 13a of the suction refrigerant passage 13.

In the check valve 15 formed as described above, the valve body 15a is moved against the biasing force of the spring 15d so that the check valve 15 is opened when the pressure of the refrigerant in the suction chamber 7b is decreased because the refrigerant is sucked into the compression mechanism 3 during a period in which the electric compressor 1 is working. With this, the check valve 15 allows the refrigerant flowing into the suction refrigerant passage 13 from the suction port 11c to flow into the suction chamber 7b from the outlet port 13a. At this time, the valve body 15a is located at a position shown in Fig. 2 against the outlet port 13a of the suction refrigerant passage 13.

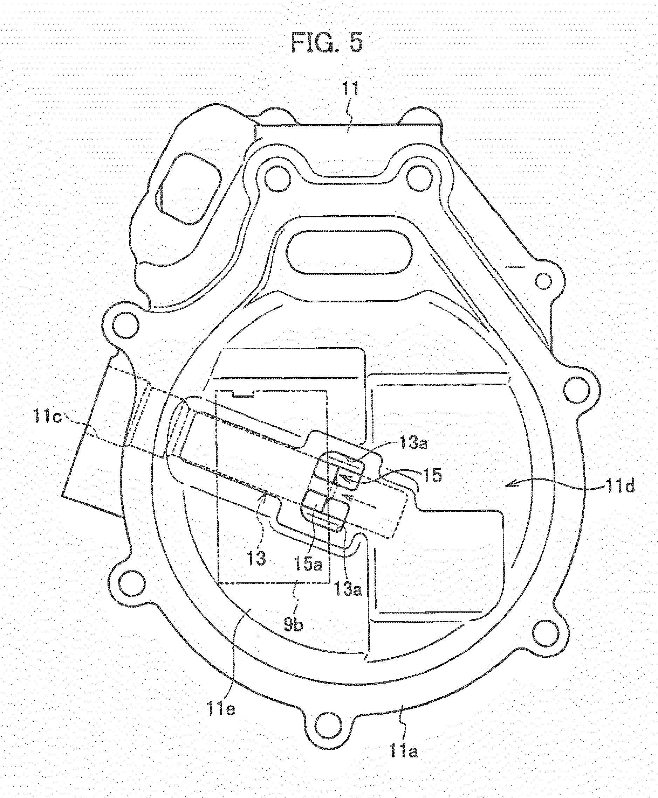

Further, during a period in which the electric compressor 1 is stopped, the valve body 15a is contacted with the valve seat part 15c of the valve seat member 15b by the biasing force of the spring 15d so that the check valve 15 is closed. At this time, the valve body 15a is located at a position shown by a side view in Fig. 5 against the outlet port 13a of the suction refrigerant passage 13.

Further, during the period in which the electric compressor 1 is stopped, for example, when the pressure in the suction chamber 7b is increased due to the high temperature and high pressure refrigerant flowing from the compression chamber 7a, the pressure in the suction chamber 7b acts as force for contacting the valve body 15a in a valve closed state with the valve seat part 15c of the valve seat member 15b. Thus, the valve body 15a is kept in the valve closed state, and the check valve 15 prevents the high temperature and high pressure refrigerant from flowing backward from the suction chamber 7b into the suction refrigerant passage 13 via the outlet port 13a.

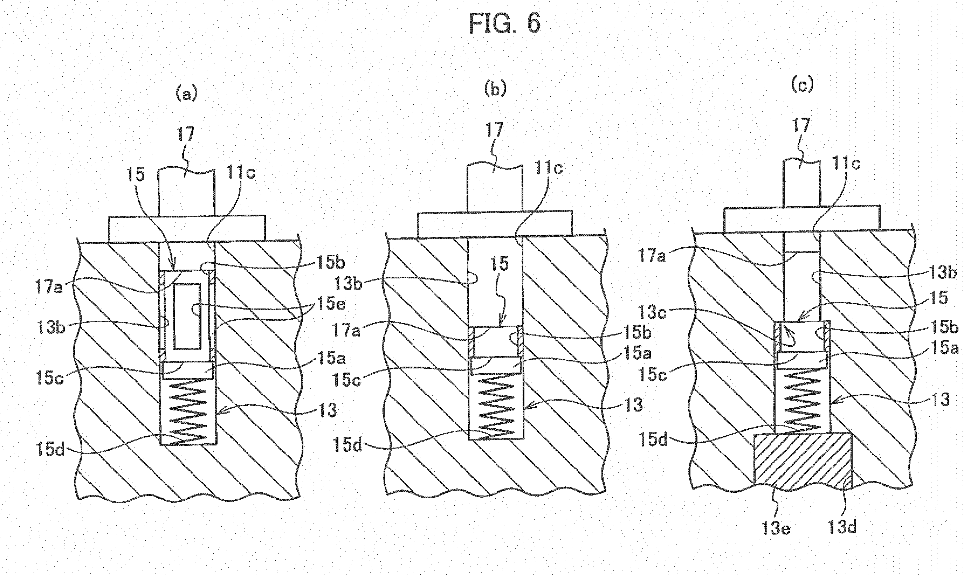

Here, in order to perform the function of the check valve 15 described above, it is necessary that the valve seat part 15c of the valve seat member 15b is fixed at a position near the outlet port 13a in the suction refrigerant passage 13 when large force is applied to the valve body 15a in the valve closing direction. As a specific configuration to perform the function described above, configurations as shown by views in Figs. 6(a) to 6(c) can be considered.

At first, as shown by the check valve 15 in Fig. 6(a), a configuration in which a length in the center axial direction of the valve seat member 15b is set as same as a gap between the valve body 15a located at a valve closed position and a distal end 17a of a refrigerant tube 17 and the valve seat member 15b is pressed by the distal end of the refrigerant tube 17 fixed to the suction port 11c may be adopted.

Further, as shown by the check valve 15 in Fig. 6(b), a configuration in which a distal end 17a of the refrigerant tube 17 is extended into the suction refrigerant passage 13 to contact with the valve seat member 15b and the valve seat member 15b is pressed by the distal end of the refrigerant tube 17 fixed to the suction port 11c may be adopted.

Further, as shown by the check valve 15 in Fig. 6(c), a configuration in which a stepped part 13c is formed in the middle of the suction refrigerant passage 13 and the valve seat member 15b is press-fitted into the suction refrigerant passage 13 from a side (outlet port 13a side) opposite to a side of the suction port 11c so that the valve seat member 15b is abutted on the stepped part 13c may be adopted.

In such a case, it is necessary that an opening 13d for press-fitting the valve seat member 15b into the suction refrigerant passage 13 is formed in the suction refrigerant passage 13 and the opening 13d is sealed by a sealing member 13e after housing the valve seat member 15b, the valve body 15a, and the spring 15d sequentially in the suction refrigerant passage 13.

It is preferable that a part to which the inner surface 13b is exposed is arranged in the suction refrigerant passage 13 in which the check valve 15 having the configuration described above is arranged, at the outlet port 13a side with respect to the refrigerant tube 17 fitted with the suction port 11c. For example, in the check valve 15 shown in Fig. 4, the inner surface 13b of the suction refrigerant passage 13 can be exposed by shortening the length in the center axial direction of the valve seat member 15b such that a large gap is provided between the distal end 17a of the refrigerant tube 17 and the valve seat member 15b.

Further, the inner surface 13b of the suction refrigerant passage 13 can be also exposed via a penetration window 15e by forming the penetration window 15e (corresponding to an opening part in Claims) on a peripheral surface of the valve seat member 15b as shown by the check valve 15 in Fig. 6(a). Further, in Fig. 6(a), a plurality of the penetration windows 15e is formed, however the number of the penetration windows 15e may be set to one.

When the inner surface 13b of the suction refrigerant passage 13 is exposed in this way, the low temperature and low pressure refrigerant flowing into the suction refrigerant passage 13 from the suction port 11c and flowing toward the outlet port 13a is always contacted with the inner surface 13b. Even if the high temperature and high pressure refrigerant flows into the suction chamber 7b from the compression chamber 7a, the check valve 15 prevents the refrigerant from flowing into the suction refrigerant passage 13 at a position near the outlet port 13a, and therefore the high temperature and high pressure refrigerant is not contacted with the inner surface 13b of the suction refrigerant passage 13.

Further, in the present embodiment, the check valve 15 shown in Fig. 4 is arranged in the suction refrigerant passage 13 and the inner surface 13b of the suction refrigerant passage 13 is exposed. As shown in Fig. 3, an exposed part of the inner surface 13b of the suction refrigerant passage 13 is located at a position just behind the contact portion 11i on the other surface 11f of the partition wall lid with which the power switching element 9b is contacted. That is, the power switching element 9b is contacted with the contact portion 11i facing a part to which the inner surface 13b of the suction refrigerant passage 13 is exposed.

Accordingly, the power switching element 9b is cooled by heat transmitted from the low temperature and low pressure refrigerant, which is passed through the suction refrigerant passage 13 from the suction port 11c toward the outlet port 13a, to the contact portion 11i via the inner surface 13b of the suction refrigerant passage 13 and the partition wall 11d.

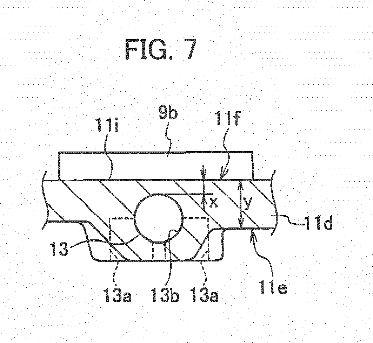

Here, as shown by the enlarged cross-sectional view of the main part of the partition wall 11d in a direction perpendicular to the passing direction A of the refrigerant in Fig. 7, a wall thickness of a part of the partition wall 11d where the suction refrigerant passage 13 is formed, namely a wall thickness x between the inner surface 13b of the suction refrigerant passage 13 and the contact portion 11i on the other surface 11f of the partition wall 11d, is smaller than a wall thickness y of a peripheral part of the suction refrigerant passage 13 of the partition wall 11d.

That is, strength of the partition wall 11d is necessary to endure differential pressure between the suction chamber 7b and the circuit housing part 11b, and therefore the wall thickness y should be set in accordance with the necessity of the strength. In a part in which the suction refrigerant passage 13 is formed, a frame which forms the suction refrigerant passage 13 has a reinforcement function. Accordingly, even if the wall thickness x of the part of the partition wall 11d in which the suction refrigerant passage 13 is formed is set to be smaller than the wall thickness y of the peripheral part of the suction refrigerant passage 13, the necessary strength can be maintained.

Further, since the wall thickness x between the inner surface 13b of the suction refrigerant passage 13 and the contact portion 11i on the other surface 11f of the partition wall 11d is smaller than the wall thickness y of the peripheral part of the suction refrigerant passage 13 of the partition wall 11d, heat transmission efficiency from the inner surface 13b of the suction refrigerant passage 13 to the contact portion 11i of the partition wall 11d is enhanced, and therefore cooling efficiency of the power switching element 9b is improved.

In this way, according to the electric compressor 1 of the present embodiment, the refrigerant is sucked from the suction port 11c and passed through the suction refrigerant passage 13, and thereby the power switching element 9b contacted with the contact portion 11i, which is formed at a back side of the suction refrigerant passage 13, is cooled. At this time, in the electric compressor 1 of the present embodiment, the check valve 15 prevents the high temperature and high pressure refrigerant, which flows into the suction chamber 7b from the compression chamber 7a, from flowing backward to the suction refrigerant passage 13. Thus, the low temperature and low pressure refrigerant always exists in the suction refrigerant passage 13 and thereby the power switching element 9b can be cooled efficiently by the refrigerant in the suction refrigerant passage 13.

Further, in the present embodiment, a configuration in which the lid part 11 a which covers the opening 7c of the housing 7 is arranged in the inverter case 11 and the suction port 11c for sucking the refrigerant into the suction chamber 7b and the suction refrigerant passage 13 are arranged in the lid part 11a is described as an example. However, a configuration in which one or both of the suction port 11c and the suction refrigerant passage 13 are arranged in the housing 7 may be adopted.

It should be noted that the present application claims priority to Japanese Patent Application No. 2015-025291, filed on February 12, 2015, and the entire contents of which are incorporated by reference herein.

### Industrial Applicability

The present invention can be used in an electric compressor that drives a compression mechanism for a refrigerant driven by an electric motor.

### Reference Signs List

1 ELECTRIC COMPRESSOR
3 COMPRESSION MECHANISM
3a, 3b SIDE BLOCK
3c CYLINDER BLOCK
3d CYLINDER CHAMBER
3e ROTOR
5 ELECTRIC MOTOR
7 HOUSING (MAIN HOUSING)
7a COMPRESSION CHAMBER
7b SUCTION CHAMBER
7c OPENING (OPENING OF HOUSING)
9 INVERTER CIRCUIT (DRIVING CIRCUIT)
9a CIRCUIT SUBSTRATE
9b POWER SWITCHING ELEMENT
11 INVERTER CASE
11a LID PART
11b CIRCUIT HOUSING PART (CIRCUIT HOUSING)
11c SUCTION PORT
11d PARTITION WALL
11e SURFACE OF PARTITION WALL (ONE SURFACE)
11f SURFACE OF PARTITION WALL (OTHER SURFACE)
11g OPENING OF CIRCUIT HOUSING PART
11h CAP
11i CONTACT PORTION (CONTACT PART)
13 SUCTION REFRIGERANT PASSAGE
13a OUTLET PORT (REFRIGERANT OUTLET)
13b INNER SURFACE
13c STEPPED PART
13d OPENING
13e SEALING MEMBER
15 CHECK VALVE
15a VALVE BODY
15b VALVE SEAT MEMBER
15c VALVE SEAT PART
15d SPRING
15e PENETRATION WINDOW (OPENING PART)

## Claims

1. An electric compressor which drives a compression mechanism for a refrigerant driven by the electric motor, the electric compressor comprising:
a main housing housing the compression mechanism and the electric motor;
a circuit housing housing a driving circuit of the electric motor, and is partitioned from the main housing by a partition wall;
a suction refrigerant passage arranged on one surface of the partition wall exposed to the main housing and formed such that the refrigerant flowing into the suction refrigerant passage from an outside of the main housing through a suction port is sucked to an inside of the main housing through a refrigerant outlet;
a check valve arranged in the suction refrigerant passage and configured to prevent the refrigerant from flowing backward from the refrigerant outlet toward the suction port in the suction refrigerant passage; and
a power switching element contacted with a contact part in the other surface of the partition wall exposed to the circuit housing, the contact part opposed to a part of the suction refrigerant passage at a side of the suction port with respect to the check valve.

2. The electric compressor according to claim 1, wherein the check valve comprises a valve body movable along a passing direction of the refrigerant in the suction refrigerant passage; a valve seat member having a valve seat part with which the valve body comes into contact with and separate from the refrigerant outlet side and is fixed to an inner surface of the suction refrigerant passage; and a spring biasing the valve body in a valve closing direction in contact with the valve seat part, and
the valve seat member is formed to have a length in the passing direction of the refrigerant such that a part of the inner surface at a side of the suction port with respect to the valve seat member is exposed.

3. The electric compressor according to claim 1, wherein the check valve comprises a valve body movable along a passing direction of the refrigerant in the suction refrigerant passage; a valve seat member having a valve seat part with which the valve body comes into contact with and separate from the refrigerant outlet side and is fixed to an inner surface of the suction refrigerant passage; and a spring biasing the valve body in a valve closing direction in contact with the valve seat part, and
the valve seat member comprises an opening part which exposes a part of the inner surface at a side of the suction port with respect to the valve seat part.

4. The electric compressor according to any one of claims 1 to 3, wherein a wall thickness of a part of the partition wall where the suction refrigerant passage is arranged is smaller than a wall thickness of the partition wall at a peripheral part of the suction refrigerant passage.
